# EUROPÄISCHE PATENTSCHRIFT

(11) **EP 3 204 659 B1**
(45) Veröffentlichungstag und Bekanntmachung des Hinweises auf die Patenterteilung: **05.02.2020**
(21) Anmeldenummer: 15766102.6
(22) Anmeldetag: 14.09.2015
(51) Int. Cl.: F16D 48/06, B60W 30/18

(54) **VERFAHREN UND VORRICHTUNG ZUM BETREIBEN EINES KRAFTFAHRZEUGS SOWIE KRAFTFAHRZEUG**
METHOD AND DEVICE FOR OPERATING A MOTOR VEHICLE, AND MOTOR VEHICLE
PROCÉDÉ ET DISPOSITIF POUR FAIRE FONCTIONNER UN VÉHICULE À MOTEUR ET VÉHICULE À MOTEUR

(30) Priorität: 09.10.2014 DE 102014220490; 21.11.2014 DE 102014223768
(43) Veröffentlichungstag der Anmeldung: 16.08.2017
(73) Patentinhaber: Vitesco Technologies Germany GmbH, 30165 Hannover (DE)
(72) Erfinder: ERTEL, Rainer, 90763 Fürth (DE); HINKEL, Gerhard, 91230 Happurg (DE); KNOLL, Bernd, 91154 Roth (DE); NITZ, Lars, 90542 Eckental (DE)
(74) Vertreter: Waldmann, Georg Alexander
(86) Internationale Anmeldenummer: PCT/EP2015/070933
(87) Internationale Veröffentlichungsnummer: WO 2016/055234

(56) Entgegenhaltungen:
- DE-A1-102011 082 893
- DE-A1-102012 102 303
- DE-B3-102011 102 332

## Beschreibung

Die Erfindung betrifft ein Verfahren und eine Vorrichtung zum Betreiben eines Kraftfahrzeugs. Weiterhin betrifft die Erfindung ein Kraftfahrzeug, umfassend eine solche Vorrichtung.

Im Stand der Technik ist bekannt, bei einer Fahrt eines Kraftfahrzeugs zu erfassen, ob die Bewegung des Kraftfahrzeugs in einem Schubbetrieb erfolgt, also der Kraftfluss von den Rädern verläuft oder umgekehrt wie in einem Zugbetrieb. Eine Schubphase kann beispielsweise anhand der Stellung eines Gaspedals erfasst werden. Wenn ein Kraftfahrzeugführer das Gaspedal nicht mehr betätigt, wird von einem Primärantrieb kein aktiver Vortrieb mehr erzeugt und das Kraftfahrzeug wechselt in einen Betriebszustand Schubabschaltung. Die Schubabschaltung, beispielsweise einer Verbrennungskraftmaschine ist eine gesteuerte Unterbrechung der Kraftstoffzufuhr, die Kupplung wird nicht geöffnet, eine Drehzahl einer Kurbelwelle entspricht einer Drehzahl auf einer Getriebeseite und ist somit proportional zur Abtriebseingangsdrehzahl. Geringe Drehzahldifferenzen ergeben sich aufgrund eines prinzipiell möglichen Mikroschlupfes, der aus Gründen der Einfachheit in nachfolgender Beschreibung vernachlässigt wird. Dadurch, dass sich die Kurbelwelle des Primärantriebs noch mit ausreichender Drehzahl dreht, kann relativ schnell wieder eine Vortriebsleistung bereitgestellt werden, wenn es eine entsprechende Anforderung durch den Kraftfahrzeugführer beispielsweise über das Gaspedal gibt.

Die PCT/EP2011/004666 beschreibt ein Verfahren eines Kraftfahrzeugs mit einem Antrieb, der zum Drehen einer Welle des Antriebs dient, die über eine Zwischeneinrichtung mit Bodenkontaktelementen des Kraftfahrzeugs gekoppelt ist, wobei über die Zwischeneinrichtung durch Variation einer Stellgröße unterschiedliche Drehmomente zwischen Antrieb und Zwischeneinrichtung übertragbar sind, und wobei während einer Fahrt des Kraftfahrzeugs erfasst wird, ob die Bewegung des Kraftfahrzeugs im Schubbetrieb erfolgt und falls dies der Fall ist, durch automatisches Einstellen der Stellgröße die Drehzahl der Welle des Antriebs verringert wird.

Aus der DE 10 2011 102 332 B3 ist ein Verfahren zum Betrieb eines längsführenden Fahrerassistenzsystems, insbesondere eines ACC-Systems, in einem Kraftfahrzeug, bekannt. Das Kraftfahrzeug weist ein Kupplungspedal als Stellmittel zum manuellen Betätigen einer Kupplung und ein manuelles Handschalter-Getriebe auf, wobei das Fahrerassistenzsystem zur Durchführung eines Fahreingriffs zur Regelung der Geschwindigkeit des Kraftfahrzeugs ausgebildet ist. Ein als zusätzliches Stellmittel für die Kupplung vorgesehener Kupplungsaktuator wird zum automatischen Öffnen und Schließen der Kupplung verwendet, wobei bei der Regelung der Geschwindigkeit auch ein gewünschter Kupplungsschlupf ermittelt und der Kupplungsaktuator entsprechend angesteuert wird. Bei der Anforderung von Kupplungsschlupf wird eine zwischen einer Schleppmomentverzögerung des Motors und einer im Segelbetrieb bei geöffneter Kupplung gegebenen Segelbetriebsverzögerung liegende Zielverzögerung ohne Ansteuerung eines weiteren Bremssystems des Kraftfahrzeugs erzeugt, indem die Kupplung teilweise geöffnet wird, so dass eine geregelte Kraftübertragung über den Antriebsstrang angefordert wird.

Weitere Verfahren zur Steuerung einer Kupplung eines Fahrzeugs sind aus der DE 10 2012 102 303 A1 und DE 10 2011 082 893 A1 bekannt.

Der Erfindung liegt die Aufgabe zu Grunde, ein gegenüber dem Stand der Technik verbessertes Verfahren zum Betreiben eines Kraftfahrzeugs, eine verbesserte Vorrichtung zum Betreiben eines Kraftfahrzeugs sowie ein verbessertes Kraftfahrzeug anzugeben.

Hinsichtlich des Verfahrens wird die Aufgabe erfindungsgemäß durch die im Anspruch 1 aufgeführten Merkmale, hinsichtlich der Vorrichtung durch die im Anspruch 6 aufgeführten Merkmale und hinsichtlich des Kraftfahrzeugs durch die im Anspruch 7 aufgeführten Merkmale gelöst.

Vorteilhafte Ausgestaltungen der Erfindung sind Gegenstand der Unteransprüche.

Das Verfahren zum Betreiben eines Kraftfahrzeugs mit einer Antriebseinheit, einer Abtriebseinheit sowie einer dazwischen angeordneten und zur Übertragung eines Drehmoments vorgesehenen Kupplung zeichnet sich erfindungsgemäß dadurch aus, dass mittels einer Erfassungseinheit ein Betriebszustand der Antriebseinheit erfasst wird und bei einem erfassten Schubbetrieb mittels einer Regeleinheit ein Kupplungsschlupf und daraus resultierend das übertragbare Drehmoment in Abhängigkeit von einer Geschwindigkeit des Kraftfahrzeugs geregelt wird.

Der Vorteil des erfindungsgemäßen Verfahrens besteht darin, dass eine voreingestellte Geschwindigkeit des Kraftfahrzeugs im Schubbetrieb mittels der Regeleinheit länger als gegenüber dem Stand der Technik gehalten wird. Eine bessere Ausnutzung einer kinetischen Energie des Kraftfahrzeugs und eine besonders hohe Kraftstoffersparnis ergeben sich vorteilig.

Dabei wird eine stufengeregelte Schubregelanlage derart unterstützt, dass der regelbare Kupplungsschlupf die Stufen der Schubregelanlage, insbesondere einen Gangwechsel, ausregelt. Das erfindungsgemäße Verfahren regelt dabei die Gänge des Kraftfahrzeugs derart, dass ein Gang und somit eine hohe Drehzahl der Antriebseinheit im Schubbetrieb geschaltet bleibt, obwohl außerhalb des Schubbetriebes eine Getriebesteuerungseinheit einen Wechsel des Gangs bei einer herkömmlichen Benennung der Gänge nach oben durchführen würde. Somit ist es im Falle einer Bergabfahrt möglich, ein Schnellerwerden des Kraftfahrzeugs mittels der Motorbremse zu verzögern. Dabei wird beispielsweise ein Gangwechsel bei einer herkömmlichen Benennung der Gänge nach unten durchgeführt und eine höhere Drehzahl der Antriebseinheit erzielt, wobei eine höhere Verlustleistung erzeugt wird. Mittels der Regeleinheit ist es möglich, den Kupplungsschlupf derart zu regeln, dass die höhere Verlustleistung, welche als Motorbremse dient, die Betriebsbremsanlage des Kraftfahrzeugs entlastet, wobei sich die Geschwindigkeit des Kraftfahrzeugs nicht unter einen Wert der voreingestellten Geschwindigkeit reduziert oder über diesen Wert erhöht. Hierbei ist ein Gangwechsel mehrerer Gänge nach unten möglich, wobei eine maximale Drehzahl der Antriebseinheit nicht überschritten werden darf, um eine mechanische Überlastung zu vermeiden.

Unter der Kupplung wird ein Maschinenelement verstanden, welches im Antriebsstrang des Kraftfahrzeugs als variierbares Bindeglied zwischen der Antriebseinheit und der Abtriebseinheit angeordnet ist, insbesondere eine Reibungskupplung oder eine Wandlerautomatik.

Um das Kraftfahrzeug in Bewegung zu versetzen, ist die Antriebseinheit notwendig, wobei diese zumindest einen Primärantrieb umfasst, welcher beispielsweise eine Verbrennungskraftmaschine ist und zum Drehen einer Welle, beispielsweise einer Kurbelwelle, ausgebildet ist. Damit das über die Welle mittels der Antriebseinheit erzeugte Drehmoment zweckdienlich genutzt werden kann, wird das Drehmoment mittels der in Kraftrichtung hinter der Antriebseinheit angeordneten Kupplung an die Abtriebseinheit übertragen. Die Abtriebseinheit ist somit in Kraftrichtung hinter der Kupplung angeordnet und umfasst alle nach der Kupplung angeordneten Bauteile, beispielsweise ein Getriebe, eine Anzahl von Abtriebswellen und eine Anzahl von Rädern.

Der Betriebszustand Schubabschaltung beschreibt eine gesteuerte Unterbrechung einer Kraftstoffzufuhr zu der Antriebseinheit. Beispielsweise ist hierbei ein Gaspedal nicht betätigt, ein Gang der Abtriebseinheit geschaltet und damit die Antriebseinheit nicht in einem Leerlauf. Die Antriebseinheit produziert keine Energie, sie nimmt stattdessen Energie auf. Aufgrund einer Schwungmasse der Abtriebseinheit wird die Antriebseinheit angetrieben ohne Kraftstoff zu verbrauchen. Die Schubabschaltung bewirkt eine Verlustleistung, da durch innere Reibung und eine innere Kompression der Antriebseinheit die Abtriebseinheit gebremst wird. Diese Verlustleistung stellt eine Motorbremse dar.

Als Alternative zur Schubabschaltung ist es im Stand der Technik bekannt, im Schub die Kupplung zu öffnen und die Antriebseinheit im Leerlauf zu betreiben. Hierbei nimmt die Antriebseinheit keine kinetische Energie auf, jedoch verbraucht die Antriebseinheit im Leerlaufbetrieb Kraftstoff. Gegenüber diesem Stand der Technik wird durch das erfindungsgemäße Verfahren die Kupplung nicht völlig geöffnet, wobei das Kraftfahrzeug länger im Schubbetrieb betrieben wird und keinen Kraftstoff verbraucht.

Weiterhin ist es im Stand der Technik möglich, im Schubbetrieb die Kupplung zu öffnen und die Antriebseinheit auszuschalten. Hierdurch wird durch die Antriebseinheit weder Kraftstoff verbraucht noch kinetische Energie aufgenommen. Bei ausgeschalteter Antriebseinheit werden Nebenaggregate, beispielsweise ein Bremskraftverstärker, eine Lenkunterstützung und/oder ein Klimakompressor, durch separate Energiequellen versorgt. Weiterhin ist für eine Beschleunigung dabei ein erneuter Startvorgang der Antriebseinheit notwendig, welcher einen Beginn des Beschleunigens deutlich verzögert. Demgegenüber weist das erfindungsgemäße Verfahren insbesondere den Vorteil auf, dass die Antriebseinheit in einem Betrieb gehalten wird und Nebenaggregate von der Antriebseinheit während des Schubbetriebs weiter versorgt werden und die Antriebseinheit für eine Beschleunigung nicht erneut gestartet werden muss, wobei dennoch aufgrund des Schubbetriebes kein Kraftstoff verbraucht wird.

In einer möglichen Ausgestaltung des erfindungsgemäßen Verfahrens wird mittels der Regeleinheit der Kupplungsschlupf in einem Arbeitsbereich zwischen 0% und kleiner 100% eingestellt, wobei als Kupplungsschlupf eine Differenz aus einer Drehzahl einer Primärantriebswelle und einer Abtriebseingangsdrehzahl, beispielsweise einer Getriebeeingangsdrehzahl bezeichnet wird. Ein Kupplungsschlupf von 100% ist während der Schubabschaltung nicht möglich, da bei Erreichen der 100% die Antriebseinheit in den Betriebszustand Leerlauf übergeht, wobei die Antriebseinheit von der Abtriebseinheit getrennt ist. In vorteilhafter Weise ist es aufgrund der Regeleinheit möglich, das übertragbare Drehmoment zu modulieren und somit die Wirkung der Motorbremse zu beeinflussen.

Mittels der Regeleinheit wird in einer Weiterbildung des erfindungsgemäßen Verfahrens der Kupplungsschlupf derart geregelt, dass die Geschwindigkeit des Kraftfahrzeugs gleich einer voreingestellten Soll-Geschwindigkeit ist oder in einem vorgegebenen Bereich um die voreingestellte Soll-Geschwindigkeit gehalten wird. Dadurch ist ein längeres Halten der voreingestellten Soll-Geschwindigkeit des Kraftfahrzeugs im Schubbetrieb möglich, das heißt, dass das Kraftfahrzeug länger mit der voreingestellten Soll-Geschwindigkeit im Schubbetrieb betreibbar ist. Daraus ergibt sich eine vorteilhafte besonders hohe Verbrauchseinsparung.

Die Soll-Geschwindigkeit des Kraftfahrzeugs wird in einer anderen Weiterbildung des erfindungsgemäßen Verfahrens mittels einer Geschwindigkeitsvorgabeeinheit einer Geschwindigkeitsregelanlage eingestellt. Somit wird eine benutzerfreundliche Bedienung ermöglicht, wobei der Kraftfahrer eine bevorzugte Geschwindigkeit des Kraftfahrzeugs einstellt und zusätzliche Arbeitsschritte durch das erfindungsgemäße Verfahren ausgeführt werden. Das erfindungsgemäße Verfahren erlaubt einem Kraftfahrer die kinetische Energie des Kraftfahrzeugs optimal zu nutzen und somit das Kraftfahrzeug kraftstoffsparend zu betreiben.

Eine andere Weiterbildung des erfindungsgemäßen Verfahrens sieht vor, dass ein Datenaustausch zwischen der Regeleinheit und der Erfassungseinheit durchgeführt wird. Somit ist in vorteilhafter Weise eine Übermittlung von Daten das erfindungsgemäße Verfahren betreffend und eine Überwachung der Funktion der Regeleinheit durch die Erfassungseinheit möglich.

Die Vorrichtung zum Betreiben eines Kraftfahrzeugs, umfassend eine Antriebseinheit, eine Abtriebseinheit sowie eine dazwischen angeordnete und zur Übertragung eines Drehmoments vorgesehene Kupplung zeichnet sich erfindungsgemäß dadurch aus, dass eine Erfassungseinheit zur Erfassung eines Betriebszustandes der Antriebseinheit vorgesehen ist und eine Regeleinheit zur Veränderung des Kupplungsschlupfes und daraus resultierend des übertragbaren Drehmoments in Abhängigkeit von einer Geschwindigkeit des Kraftfahrzeugs bei erfasstem Schubbetrieb vorgesehen ist. Durch eine Regelung des Kupplungsschlupfes ist es in vorteilhafter Weise möglich, das Kraftfahrzeug gegenüber dem Stand der Technik länger im Schubbetrieb zu halten und eine besonders hohe Kraftstoffersparnis zu erzielen.

Weiterhin ist es mittels der Erfassungseinheit möglich, verschiedene das Kraftfahrzeug betreffende Signale zu erfassen. Beispielsweise ist die Erfassungseinheit als eine Antriebssteuerungseinheit ausgebildet, welche eine Lastanforderung an die Antriebseinheit und/oder eine Geschwindigkeit des Kraftfahrzeugs erfasst. In vorteilhafter Weise kann die Erfassungseinheit eine Überwachung der Funktionen der Regeleinheit durchführen.

Ausführungsbeispiele der Erfindung werden im Folgenden anhand von Zeichnungen näher erläutert.

Dabei zeigen:
- Fig. 1: schematisch ein Blockschaltbild eines möglichen Ausführungsbeispiels
- Fig. 2: schematisch ein Höhenprofil eines Fahrbahnabschnitts und zugehörige Fahrbahnneigung sowie kraftfahrzeugspezifische Parameter während einer Befahrung des Fahrbahnabschnitts unter Anwendung eines Ausführungsbeispiels des erfindungsgemäßen Verfahrens.

Einander entsprechende Teile sind in allen Figuren mit den gleichen Bezugszeichen versehen.

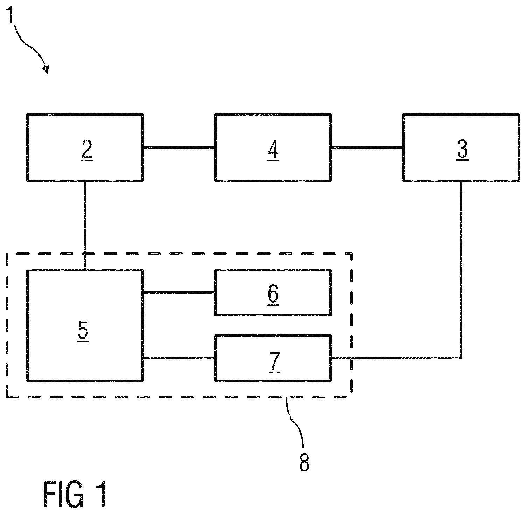

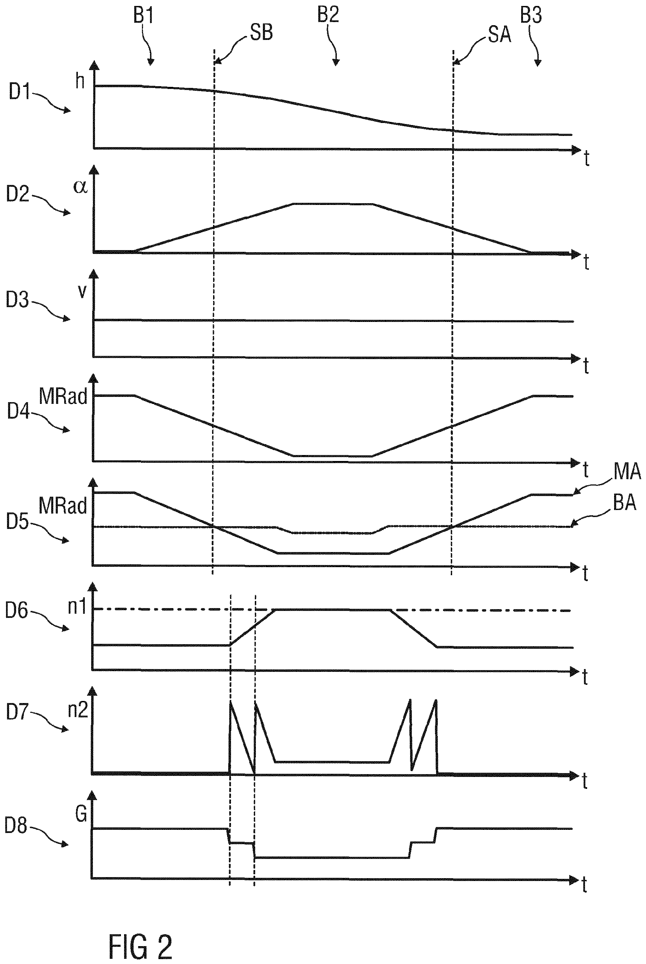

Figur 1 zeigt ein Blockschaltbild eines Kraftfahrzeugs 1, umfassend eine Antriebseinheit 2 zum Erzeugen eines Drehmoments, eine Abtriebseinheit 3, welche das erzeugte Drehmoment für einen Abtrieb nutzt, eine Kupplung 4 zur Übertragung des Drehmoments von der Antriebseinheit 2 zur Abtriebseinheit 3 sowie eine Ausführungsform der erfindungsgemäßen Vorrichtung 8 umfassend eine Erfassungseinheit 5 zur Erfassung eines Betriebszustandes der Antriebseinheit 2, eine Regeleinheit 6 zur Regelung eines Kupplungsschlupfes und eine Geschwindigkeitsregelanlage 7 zur Einstellung einer in Figur 2 näher dargestellten Geschwindigkeit v des Kraftfahrzeugs 1.

Mittels der Regeleinheit 6 wird im Schubbetrieb der Kupplungsschlupf derart geregelt, dass die Geschwindigkeit v des Kraftfahrzeugs 1 einer voreingestellten Soll-Geschwindigkeit des Kraftfahrzeugs 1 entspricht oder in einem vorgegebenen Bereich um die Soll-Geschwindigkeit gehalten wird.

Mittels der Regeleinheit 6 wird der Kupplungsschlupf in einem Arbeitsbereich zwischen 0% und kleiner 100% eingestellt, so dass eine Modulation des übertragbaren Drehmoments ermöglicht wird.

Die Soll-Geschwindigkeit des Kraftfahrzeugs 1 wird mittels einer Geschwindigkeitsvorgabeeinheit einer Geschwindigkeitsregelanlage 7 eingestellt.

Zwischen der Regeleinheit 6 und der Erfassungseinheit 5 wird ein Datenaustausch durchgeführt, sodass Informationen das erfindungsgemäße Verfahren betreffend, beispielsweise die Geschwindigkeit v des Kraftfahrzeugs 1, zwischen der Regeleinheit 6 und der Erfassungseinheit 5 übermittelt werden können.

In einem weiteren, nicht dargestellten Ausführungsbeispiel wird das Kraftfahrzeug 1 mittels der Antriebseinheit 2, welche zumindest eine Verbrennungskraftmaschine umfasst, angetrieben und das Drehmoment mittels der Kupplung 4 und der Abtriebseinheit 3, welche ein Getriebe, eine Anzahl von Abtriebswellen und eine Anzahl von Rädern umfasst, übertragen. In dem Kraftfahrzeug 1 ist ein Gaspedal vorgesehen, bei dessen Betätigung Kraftstoff in die Verbrennungskraftmaschine eingespritzt wird. Die Kupplung 4 ist vorliegend regelbar und kann das zu übertragene Drehmoment bei ansonsten gleichen Bedingungen variabel regeln. Ein Kraftfahrzeugführer stellt mittels einer Geschwindigkeitsregelanlage 7 eine Geschwindigkeit v des Kraftfahrzeugs 1 ein und betätigt das Gaspedal nicht mehr. Wenn im Verlauf der Fahrt das Kraftfahrzeug 1 ein Gefälle hinab fährt, wechselt das Kraftfahrzeug 1 in den Betriebszustand Schubabschaltung, welcher durch die Erfassungseinheit 5 erfasst wird. Während der Schubabschaltung wird die Antriebseinheit 2 angetrieben und erzeugt keinen Vortrieb. Die Verlustenergie wird zunächst durch Reibung in der Antriebseinheit 2 und der Abtriebseinheit 3 erzeugt und bremst das Kraftfahrzeug 1, es wirkt eine Motorbremse, wobei das Kraftfahrzeug 1 zunächst an Geschwindigkeit v verliert. Um die voreingestellte Geschwindigkeit v des Kraftfahrzeugs 1 zu halten, wird mittels der Regeleinheit 6 der Kupplungsschlupf derart geregelt, dass die Kupplung 4 nicht vollständig geschlossen ist und somit das Kraftfahrzeug 1 schwächer als bei einer herkömmlichen Verzögerung durch die Schubabschaltung abgebremst wird. Die Regeleinheit 6 kann innerhalb des Arbeitsbereichs somit die Geschwindigkeit v des Kraftfahrzeugs 1 verlängert in einem voreingestellten Bereich halten, wobei im Gegensatz zum Stand der Technik die kinetische Energie des Kraftfahrzeugs 1 besser genutzt wird und eine besonders hohe Kraftstoffersparnis ermöglicht wird.

Die Vorrichtung 8 ermöglicht, dass eine stufengeregelte Schubregelanlage derart unterstützt wird, dass der regelbare Kupplungsschlupf die Stufen der Schubregelanlage bei einem Gangwechsel ausregelt.

Das Kraftfahrzeug 1, ein Lastkraftwagen, fährt mit einem hohen Gesamtgewicht einen Berg hinab und befindet sich in der Schubabschaltung. Aufgrund des hohen Gesamtgewichts nimmt zunächst die Geschwindigkeit v des Kraftfahrzeugs 1 zu. Um einem Überhitzen einer Betriebsbremsanlage und einer Verringerung einer Bremsleistung entgegenzuwirken, sollen durch das erfindungsgemäße Verfahren die Stufen der stufengeregelten Schubregelanlage ausgeregelt werden. Bei Überschreiten der voreingestellten Geschwindigkeit v des Kraftfahrzeugs 1 wird ein Gangwechsel bei einer herkömmlichen Benennung von in Figur 2 näher dargestellten Gängen G eines Getriebes nach unten durchgeführt und somit eine ebenfalls in Figur 2 dargestellten höhere Motordrehzahl n1 erzielt, wobei eine höhere Verlustleistung der Antriebseinheit 2 und ein höherer Bremseffekt erzeugt wird.

Die Regeleinheit 6 regelt ein Schließen oder Öffnen der Kupplung 4 immer nur so weit, dass die Motorbremse das Kraftfahrzeug 1 auf die voreingestellte Geschwindigkeit v abbremst. Die Betriebsbremsanlage kann durch das Ausregeln der Gänge G unterstützt werden, wodurch in vorteilhafter Weise die Lebensdauer der Betriebsbremsanlage erhöht wird.

In einem anderen nicht dargestellten Ausführungsbeispiel wird eine Änderung der voreingestellten Geschwindigkeit v während des Betriebs des Verfahrens durchgeführt.

Beispielsweise stellt der Kraftfahrzeugführer mittels der Geschwindigkeitsregelanlage 7 die Geschwindigkeit v des Kraftfahrzeugs 1 ein und betätigt das Gaspedal nicht mehr. Während des Regelns des Kupplungsschlupfes mittels der Regeleinheit 6 verringert der Kraftfahrzeugführer die voreingestellte Geschwindigkeit v. Das Verfahren regelt die Gangwechsel derart aus, dass eine für das Verfahren optimale Motorbremsleistung durch Schalten der Gänge G in optimale Drehzahlbereiche erreicht wird. Gleichzeitig wird der Kupplungsschlupf derart geregelt, dass die voreingestellte verringerte Geschwindigkeit v erreicht und gehalten wird.

Figur 2 zeigt ein Höhenprofil h eines Fahrbahnabschnitts und zugehörige Fahrbahnneigung α sowie kraftfahrzeugspezifische Parameter während einer Befahrung des Fahrbahnabschnitts unter Anwendung eines möglichen Ausführungsbeispiels des erfindungsgemäßen Verfahrens.

Das Ausführungsbeispiel wird mittels acht Diagrammen D1 bis D8 beschreiben, wobei die Diagramme D1 bis D5 in drei Bereiche B1 bis B3 unterteilt sind. Ein erster Bereich B1 stellt eine Ebene und ein zunehmendes Gefälle, ein zweiter Bereich B2 ein konstantes Gefälle und ein dritter Bereich B3 ein abnehmendes Gefälle und die Ebene des Fahrbahnabschnittes dar.
Der erste Bereich B1 und der zweite Bereich B2 sind mittels einer ersten Trennlinie getrennt, wobei diese einen Schubbetriebbeginn SB des Kraftfahrzeugs 1 beschreibt. Der zweite Bereich B2 und der dritte Bereich B3 sind durch eine zweite Trennlinie getrennt, wobei diese ein Ende der Schubabschaltung kennzeichnet und als Schubausstieg SA bezeichnet wird.

Alle Diagramme D1 bis D8 beziehen sich auf einer jeweiligen x Achse auf eine Zeit t.

Ein erstes Diagramm D1 beschreibt den Höhenverlauf h in Abhängigkeit der Zeit t mit einer Achsenbezeichnung einer y Achse mit einer Höhe h. Das Kraftfahrzeug 1 fährt im ersten Bereich B1 eine Gefällefahrt, wobei der Kraftfahrzeugführer das Gaspedal nicht mehr betätigt, da das Kraftfahrzeug 1 nun von einer Hangabtriebskraft beschleunigt wird. Um eine gewünschte Geschwindigkeit v nicht zu überschreiten, muss das Kraftfahrzeug 1 abgebremst werden.

Ein zweites Diagramm D2 beschreibt die Fahrbahnneigung α in Abhängigkeit der Zeit t mit der Achsenbezeichnung der y Achse mit einem Winkel α.

Ein drittes Diagramm D3 beschreibt eine Geschwindigkeit V in Abhängigkeit der Zeit t mit der Achsenbezeichnung der y Achse mit einer Geschwindigkeit v, wobei die Geschwindigkeit v mittels des Verfahrens konstant eingestellt wird.

Ein viertes Diagramm D4 beschreibt ein Radmoment MRad in Abhängigkeit der Zeit t mit der Achsenbezeichnung der y Achse mit dem Raddrehmoment MRad. Sobald das Raddrehmoment MRad einen Nulldurchgang erreicht, beginnt der Schubbetrieb und das Halten der Geschwindigkeit v mittels des Verfahrens beginnt.

Ein fünftes Diagramm D5 beschreibt das Radmoment MRad, jedoch unterteilt in einen Motoranteil MA und einen Betriebsbremsenanteil BA, in Abhängigkeit der Zeit t mit der Achsenbezeichnung der y Achse mit dem Radmoment MRad. Ein Zeitraum für ein aktives Bremsen durch den Kraftfahrzeugführer wird verringert, es können höhere Motordrehzahlen n1 angefahren werden, um die Motorbremsleistung maximal zu nutzen.

In den Diagrammen D6 bis D8 sind eine dritte und vierte Trennlinie dargestellt, wobei diese einen vierten Bereich B4 einschließen, welcher einen Wechsel eines Gangs G darstellt.

Das sechste Diagramm D6 beschreibt eine Motordrehzahl n1 in Abhängigkeit der Zeit t mit der Achsenbezeichnung der y Achse mit der Motordrehzahl n1. Der Gangwechsel wird zu Beginn des Schubbetriebes durchgeführt, wobei die maximale Motordrehzahl n1 und somit eine maximale Motorbremsleistung über nahezu den gesamten Schubbetrieb ausgenutzt werden können.

Das siebte Diagramm D7 beschreibt eine Referenzdrehzahl n2 der Kupplung 4 in Abhängigkeit der Zeit t mit der Achsenbezeichnung der y Achse mit einer Differenzdrehzahl n2. Nach erfolgter Rückschaltung wird die Motordrehzahl n1 über den geregelten Kupplungsschlupf bis auf eine Differenzdrehzahl n2 mit dem Wert Null heruntergefahren, bis ein Gang G voll eingekuppelt ist, das heißt die Kupplung vollständig geschlossen ist. Wenn die Differenzdrehzahl n2 null ist und die maximale Motordrehzahl n1 noch nicht erreicht wurde, wird die nächste Rückschaltung durchgeführt.

Das achte Diagramm D8 beschreibt einen Gang G in Abhängigkeit der Zeit t mit der Achsenbezeichnung der y-Achse mit einer Anzahl von Gängen G. Wenn die maximale Motordrehzahl n1 erreicht wurde, bleibt die Differenzdrehzahl n2 konstant und es kann nicht mehr Motorbremsmoment aufgebaut werden. Bei weiterem Bremsbedarf müssen nun andere Bremssysteme des Kraftfahrzeugs, beispielsweise eine Betriebsbremse, zusätzlich aktiviert werden.

### Bezugszeichenliste

- 1: Kraftfahrzeug
- 2: Antriebseinheit
- 3: Abtriebseinheit
- 4: Kupplung
- 5: Erfassungseinheit
- 6: Regeleinheit
- 7: Geschwindigkeitsregelanlage
- 8: Vorrichtung

- D1 bis D8: Diagramme
- BA: Betriebsbremsenanteil
- B1: Erster Bereich
- B2: Zweiter Bereich
- B3: Dritter Bereich
- G: Gang
- h: Höhe
- MA: Motoranteil
- MRad: Raddrehmoment
- n1: Motordrehzahl
- n2: Referenzdrehzahl
- SA: Schubausstieg
- SB: Schubbetriebbeginn
- t: Zeit
- v: Geschwindigkeit

- α: Winkel

## Patentansprüche

1. Verfahren zum Betreiben eines Kraftfahrzeugs (1) mit einer Antriebseinheit (2), einer Abtriebseinheit (3) sowie einer dazwischen angeordneten und zur Übertragung eines Drehmoments vorgesehenen Kupplung (4), wobei mittels einer Erfassungseinheit (5) ein Betriebszustand der Antriebseinheit (2) erfasst wird und bei einem erfassten Schubbetrieb mittels einer Regeleinheit (6) ein Kupplungsschlupf und daraus resultierend das übertragbare Drehmoment in Abhängigkeit von einer Geschwindigkeit des Kraftfahrzeugs (1) geregelt wird, wobei eine stufengeregelte Schubregelanlage derart unterstützt wird, dass der regelbare Kupplungsschlupf die Stufen der Schubregelanlage bei einem Gangwechsel ausregelt.

2. Verfahren nach Anspruch 1, wobei mittels der Regeleinheit (6) der Kupplungsschlupf derart geregelt wird, dass eine Geschwindigkeit des Kraftfahrzeugs (1) gleich einer voreingestellten Soll-Geschwindigkeit des Kraftfahrzeugs (1) ist oder in einem vorgegebenen Bereich um die voreingestellte Soll-Geschwindigkeit gehalten wird.

3. Verfahren nach Anspruch 1 oder 2, wobei mittels der Regeleinheit (6) der Kupplungsschlupf in einem Arbeitsbereich zwischen 0% und kleiner 100% eingestellt wird.

4. Verfahren nach Anspruch 2 oder 3, wobei die Soll-Geschwindigkeit des Kraftfahrzeugs (1) mittels einer Geschwindigkeitsvorgabeeinheit einer Geschwindigkeitsregelanlage (7) eingestellt wird.

5. Verfahren nach einem der vorherigen Ansprüche, wobei zwischen der Regeleinheit (6) und der Erfassungseinheit (5) ein Datenaustausch durchgeführt wird.

6. Vorrichtung (8) zum Betreiben eines Kraftfahrzeugs (1), umfassend eine Antriebseinheit (2), eine Abtriebseinheit (3) sowie eine dazwischen angeordnete und zur Übertragung eines Drehmoments vorgesehene Kupplung (4),
**dadurch gekennzeichnet, dass**
- eine Erfassungseinheit (5) zur Erfassung eines Betriebszustandes der Antriebseinheit (2) vorgesehen ist,
- eine stufengeregelte Schubregelanlage vorgesehen ist, und
- eine Regeleinheit (6) zur Veränderung des Kupplungsschlupfes und daraus resultierend des übertragbaren Drehmoments in Abhängigkeit von einer Geschwindigkeit des Kraftfahrzeugs bei erfasstem Schubbetrieb derart vorgesehen ist, dass der regelbare Kupplungsschlupf die Stufen der Schubregelanlage bei einem Gangwechsel ausregelt.

7. Kraftfahrzeug (1) umfassend eine in Anspruch 6 angegebene Vorrichtung (8).

## Claims

1. Method for operating a motor vehicle (1) having a drive unit (2), an output unit (3), and a clutch (4), which is arranged therebetween and which is provided for transmitting a torque, wherein an operating state of the drive unit (2) is detected by means of a detection unit (5) and, if an overrun mode is detected, a clutch slip and, resulting therefrom, the torque that can be transmitted is controlled in accordance with a speed of the motor vehicle (1) by means of a control unit (6), wherein a step-by-step controlled overrun control system is assisted in such a way that the controllable clutch slip compensates the steps of the overrun control system in the case of a gear change.

2. Method according to Claim 1, wherein the clutch slip is controlled by means of the control unit (6) in such a way that a speed of the motor vehicle (1) is equal to a preset target speed of the motor vehicle (1) or is held in a predetermined range around the preset target speed.

3. Method according to Claim 1 or 2, wherein the clutch slip is set in an operating range between 0% and less than 100% by means of the control unit (6).

4. Method according to Claim 2 or 3, wherein the target speed of the motor vehicle (1) is set by means of a speed setting unit of a cruise control system (7).

5. Method according to one of the preceding claims, wherein data exchange is carried out between the control unit (6) and the detection unit (5).

6. Device (8) for operating a motor vehicle (1), comprising a drive unit (2), an output unit (3), and a clutch (4), which is arranged therebetween and which is provided for transmitting a torque,
**characterized in that**
- a detection unit (5) for detecting an operating state of the drive unit (2) is provided,
- a step-by-step controlled overrun control system is provided, and
- a control unit (6) for varying the clutch slip and, resulting therefrom, the torque that can be transmitted in accordance with a speed of the motor vehicle if an overrun mode is detected is provided such that the controllable clutch slip compensates the steps of the overrun control system in the case of a gear change.

7. Motor vehicle (1) comprising a device (8) specified in Claim 6.

## Revendications

1. Procédé de fonctionnement d'un véhicule automobile (1) à l'aide d'une unité d'entraînement (2), d'une unité de sortie (3) et d'un embrayage (4) disposé entre elles et prévu pour transmettre un couple, un état de fonctionnement de l'unité d'entraînement (2) est détecté au moyen d'une unité de détection (5) et, en cas de détection d'un mode de poussée, le patinage d'embrayage et en conséquence le couple transmissible étant régulé en fonction d'une vitesse du véhicule automobile (1) au moyen d'une unité de régulation (6), un système de régulation de poussée régulé par paliers étant assisté de telle sorte que le patinage d'embrayage régulable régule les paliers du système de régulation de poussée lors d'un changement de vitesse.

2. Procédé selon la revendication 1, le patinage de l'embrayage étant régulé au moyen de l'unité de régulation (6) de telle sorte que la vitesse du véhicule automobile (1) soit égale à une vitesse de consigne préréglée du véhicule automobile (1) ou soit maintenue dans une plage prescrite autour de la vitesse de consigne préréglée.

3. Procédé selon la revendication 1 ou 2, le patinage de l'embrayage étant régulé dans une plage de travail entre 0 % et moins de 100 % au moyen de l'unité de régulation (6).

4. Procédé selon la revendication 2 ou 3, la vitesse de consigne du véhicule automobile (1) étant régulée au moyen d'une unité de consigne de vitesse d'une installation de réglage de la vitesse (7).

5. Procédé selon l'une des revendications précédentes, un échange de données étant effectué entre l'unité de régulation (6) et l'unité de détection (5).

6. Dispositif (8) de fonctionnement d'un véhicule automobile (1), ledit dispositif comprend une unité d'entraînement (2), une unité de sortie (3) et un embrayage (4) disposé entre elles et prévu pour transmettre un couple,
**caractérisé en ce que**
- une unité de détection (5) est prévue pour détecter un état de fonctionnement de l'unité d'entraînement (2),
- un système de régulation de poussée régulé par paliers est prévu, et
- une unité de régulation (6) est prévue pour modifier le patinage de l'embrayage et en conséquence le couple transmissible en fonction de la vitesse du véhicule automobile en cas de détection d'un mode de poussée de sorte que le patinage de l'embrayage régulable régule les paliers du système de régulation de poussée lors d'un changement de vitesse.

7. Véhicule automobile (1) comprenant un dispositif (8) selon la revendication 6.
